# DEMANDE DE BREVET EUROPEEN

(11) **EP 2 199 653 A1**
(43) Date de publication de la demande: **23.06.2010**
(21) Numéro de dépôt: 09290975.3
(22) Date de dépôt: 18.12.2009
(51) Int. Cl.: F16N 11/10

(54) **Dispositif portatif de graissage automatique de pièces mécaniques, ensemble et procédé associés**

(30) Priorité: 22.12.2008 FR 0807345
(71) Demandeur: SNR Roulements, 74000 Annecy (FR)
(72) Inventeur: Oddoux, Christophe, 74940 Annecy le Vieux (FR)
(74) Mandataire: Broydé, Marc

(57) **Abrégé**

La présente invention a pour objet un dispositif de graissage automatique portatif de pièces mécaniques comprenant un corps principal comportant au moins une paroi intérieure délimitant une chambre fermée par un couvercle hermétique (4), et pourvue d'une ouverture (2), la paroi ayant une partie cylindrique (3) définissant un axe de référence du dispositif, un piston (9) mobile axialement à l'intérieur de la partie cylindrique (3) et délimitant avec la paroi intérieure du corps principal d'une part un volume (10) variable de stockage d'un élément visqueux tel qu'une graisse et relié à l'ouverture (2), et d'autre part un volume variable (11) d'expansion, ledit piston (9) étant mobile entre une position basse à proximité de l'ouverture (2), où le volume de stockage (10) de l'élément visqueux est quasi nul, et une position haute éloignée de l'ouverture (2), des moyens générateurs de gaz, comportant un électrolyte enfermé dans le volume variable d'expansion (11) relié électriquement à une commande électrique (8, 80).

Selon l'invention, la paroi de la partie cylindrique (3) comprend au moins un évent (12) débouchant dans le volume variable d'expansion (11) et situé à proximité de la position haute du piston (9), ledit évent (12) étant refermable par une vis (13) ou autre élément d'étanchéité mobile, et en ce qu'il comprend en outre un segment d'étanchéité (15) monté sur le piston (9) en contact sur toute la course axiale du piston avec la partie cylindrique de la paroi de la chambre.

## Description

### DOMAINE TECHNIQUE DE L'INVENTION

L'invention se rapporte au domaine des dispositifs de graissage, appelés graisseurs automatiques, destinés à distribuer une certaine quantité de graisse ou autre composant de viscosité équivalente, à des éléments mécaniques divers et variés qui nécessitent une lubrification à partir d'un point de distribution précis et notamment, bien que de manière non exclusive, à des paliers lisse ou à roulement.

Plus précisément ces dispositifs sont destinés à distribuer par exemple de la graisse ou un autre lubrifiant grâce à un gaz propulseur généré ou emmagasiné à l'intérieur du dispositif. Ce sont donc de petites unités commercialisées prêtes à l'emploi, et remplies avec un large choix de lubrifiants, dont l'activation et le réglage peuvent être choisis de façon précise.

### ETAT DE LA TECHNIQUE ANTERIEURE

Les graisseurs automatiques de ce type sont jetables en ce sens qu'une fois vidés de la graisse qu'ils contiennent à l'origine, ils ne sont pas réutilisables. De ce fait le graissage représente pour l'utilisateur un coût non négligeable.

Le document US 5 404 966 décrit un dispositif de ce type à l'intérieur duquel un piston permet d'expulser la graisse par un orifice unique situé à une extrémité « basse », après que l'utilisateur a actionné un contacteur situé à l'autre extrémité ; ce contacteur, qui fait partie d'un circuit électrique intégré au graisseur, permet de déclencher la génération d'un gaz dit propulseur qui translate le piston depuis une position haute dans laquelle le dispositif est rempli de graisse, vers la position dite basse dans laquelle le dispositif ne contient plus de graisse ; le piston est alors placé au plus près de l'orifice de sortie de la graisse.

Ce graisseur n'est nullement rechargeable, ce qui, comme énoncé ci-dessus représente un coût pour l'utilisateur ; de plus le graisseur déchargé est un déchet et doit donc être détruit, ce qui a aussi un coût pour la collectivité.

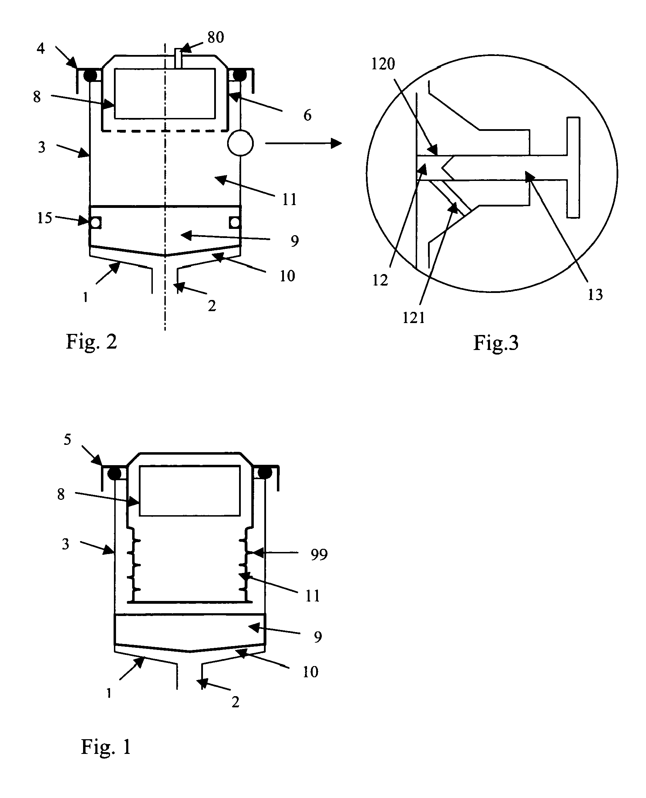

On connaît par ailleurs un graisseur tel que schématisé sur la figure 1, qui comprend notamment un corps principal 1 formant une chambre remplie de graisse 10 et pourvue d'une ouverture 2. A l'intérieur de cette chambre est monté un piston 9 mobile fixé à l'extrémité d'un soufflet 99 formant une manche déformable fixée hermétiquement au corps principal, de manière à délimiter à l'intérieur du corps principal d'une part un volume variable de stockage de graisse 10, du côté de l'ouverture 2, et d'autre part un volume d'expansion clos 11. Dans le volume d'expansion 11 sont disposés des moyens générateurs de gaz 8. Comme dans le dispositif précédent, l'activation des moyens générateurs de gaz 8 provoque l'expansion de la chambre d'expansion et l'éjection de la graisse par l'ouverture au fur et à mesure que le volume de stockage se réduit. Il n'est pas possible de dépressuriser le volume d'expansion 11 pour remplir de nouveau de volume de stockage 10, de sorte que ce dispositif automatique de graissage est jetable sans possibilité de réutilisation. En outre il a été constaté que ce modèle est surdimensionné car en fait ses moyens intégrés de génération de gaz 8 pourraient permettre de réaliser au moins une autre vidange de graisse.

### EXPOSE DE L'INVENTION

L'invention vise à remédier aux inconvénients de l'état de la technique et notamment de permettre à l'utilisateur de recharger un graisseur automatique à faible coût, de façon aisée, fiable et sûre.

Pour ce faire est proposé un dispositif de graissage automatique de pièces mécaniques comprenant :
- un corps principal comportant au moins une paroi intérieure délimitant une chambre, et pourvue d'une ouverture, la paroi ayant une partie cylindrique définissant un axe de référence du dispositif,
- un piston mobile axialement à l'intérieur de la partie cylindrique et délimitant avec la paroi intérieure du corps principal d'une part un volume variable de stockage d'un élément visqueux tel qu'une graisse et relié à l'ouverture, et d'autre part un volume variable d'expansion, ledit piston étant mobile entre une position basse à proximité de l'ouverture, où le volume de stockage de l'élément visqueux est quasi nul, et une position haute éloignée de l'ouverture,
- des moyens générateurs de gaz, comportant un électrolyte enfermé dans le volume variable d'expansion relié électriquement à une commande électrique.

Selon un premier aspect de l'invention, la paroi de la partie cylindrique comprend au moins un évent disposé de façon à déboucher dans le volume variable d'expansion en position haute du piston, ledit évent étant refermable par une vis ou autre élément d'étanchéité mobile. Le piston est en outre pourvu d'un segment d'étanchéité en contact avec la partie cylindrique de la paroi de la chambre sur toute la course axiale du piston entre la position haute et la position basse.

La présente invention permet avantageusement d'atteindre les objectifs énoncés ci-dessus, notamment en termes de rechargement, de simplicité d'utilisation et de fiabilité.

En outre, ladite commande électrique est disposée dans un volume intérieur du corps principal.

Selon un mode de réalisation de l'invention, ladite ouverture est disposée sur l'axe de référence du dispositif.

De façon avantageuse, ledit évent dans la paroi du cylindre comprend un premier canal susceptible de loger l'élément d'étanchéité sur toute sa longueur, et un deuxième canal débouchant par une première extrémité dans le premier canal et par une deuxième extrémité à l'extérieur dudit corps cylindrique. L'élément d'étanchéité mobile peut comprendre une vis pointeau.

On réalise ainsi un équilibre de pressions permettant, pendant le rechargement en graisse par l'ouverture, de vider le volume contenant des gaz et de re-remplir aisément le volume initialement rempli de graisse. Une étanchéité vis-à-vis de l'atmosphère extérieure est par ailleurs obtenue par l'enfoncement de la vis pointeau dans toute la longueur du premier canal, une fois le rechargement en graisse effectué ou bien dès la première utilisation.

Par ailleurs, le corps principal peut être muni d'un couvercle hermétique fixé, par exemple par vissage sur une partie distale de la paroi extérieure du corps cylindrique. Le couvercle permet d'accéder à l'intérieur de la chambre pour le montage du piston et des moyens générateurs de gaz. Le vissage est de fabrication et de mise en oeuvre simple et fiable.

En outre, le couvercle peut comprendre plusieurs éléments dont l'un est démontable pour permettre l'accès à un moyen de commande électrique. Cette disposition est tout à fait pratique et ergonomique.

En outre, l'élément d'étanchéité monté sur la paroi extérieure dudit piston comprend au moins un joint torique. On réalise ainsi de façon simple, peu coûteuse et efficace une étanchéité interne entre le volume contenant les gaz et le volume renfermant la graisse.

Préférentiellement, le corps principal est constitué d'un matériau transparent afin de pouvoir visualiser aisément le niveau de graisse contenu dans le graisseur.

Selon un mode de réalisation, l'élément visqueux contient une huile qui présente une viscosité comprise entre 5 cSt (centi-Stock) et 1000cSt.

Sans sortir du cadre de l'invention, on peut prévoir un ensemble comprenant un dispositif selon l'invention et une recharge remplie d'un élément visqueux tel qu'une graisse, adaptable sur l'ouverture du dispositif.

L'invention vise en outre un procédé d'utilisation d'un dispositif de graissage portatif consistant à vider le dispositif de sa substance graisseuse à travers une ouverture, grâce à une expansion de gaz dans un volume d'expansion du dispositif, ladite substance étant placée initialement dans un volume variable de stockage du dispositif, séparé du volume variable d'expansion par un piston ; le procédé consiste en outre à recharger le dispositif en substance graisseuse à travers ladite ouverture pendant une phase de mise à la pression atmosphérique du volume de stockage et du volume d'expansion des gaz.

### BREVE DESCRIPTION DES FIGURES

D'autres caractéristiques et avantages de l'invention ressortiront à la lecture de la description qui suit, en référence aux figures annexées, qui illustrent :
- La figure 1, une vue de coupe d'un graisseur connu, déjà commentée ;
- La figure 2, une vue en coupe longitudinale d'un graisseur selon un mode préféré de réalisation de l'invention; et
- La figure 3 une coupe détaillée de l'orifice spécifique dans la paroi du graisseur.

Pour plus de clarté, les éléments identiques ou similaires sont repérés par des signes de référence identiques sur l'ensemble des figures.

### DESCRIPTION DETAILLEE D'UN MODE DE REALISATION

La figure 2 montre un graisseur dit automatique selon un mode de réalisation de l'invention. Ce dispositif comprend un corps principal essentiellement constitué de deux parties : une première partie 1 de section décroissante vers une ouverture 2 axiale de sortie de l'élément visqueux consommable qu'il renferme ; ici la première partie 1 est en forme de tronc de cône dont la grande section est liée à une deuxième partie 3 du corps principal, de forme cylindrique.

L'extrémité libre, ou distale de la partie cylindrique 3 est liée et recouverte par un moyen de fermeture 4 par exemple vissé sur cette extrémité distale.

Le volume intérieur délimité par le corps principal 1, 3 et le moyen 4 est séparé en plusieurs espaces : l'un d'entre eux 10 est destiné à recevoir l'élément visqueux ; cet espace est un volume variable délimité par la première partie 1 du dispositif, par la partie proximale du cylindre 3 et par un piston 9 mobile axialement dans la partie cylindrique 3.

Un deuxième volume 11 est défini à l'intérieur du dispositif, délimité par la partie supérieure du piston 9, la partie distale du cylindre 3 et un élément de séparation et de support 6 placé dans la partie la plus distale du cylindre 3. L'élément de séparation et de support 6 peut être une sorte de coupelle circulaire retenue et axialement intercalée entre le moyen de fermeture 4 et un épaulement dans l'épaisseur de la partie cylindrique 3. Il s'agit de lier l'élément de séparation et de support 6 aux autres éléments fixes du dispositif.

Par ailleurs, la partie ouverte de l'élément de séparation 6 est obturée par un moyen de fermeture 4, de sorte que l'on définit un troisième volume dans lequel sont placés des éléments électriques 8 de commande de moyens générateurs de gaz. Plus précisément, les moyens 8 peuvent comprendre un circuit électrique, une batterie, des éléments conducteurs, et un actionneur 80. Ces moyens sont arrangés de sorte qu'une réaction chimique est déclenchée et provoque une génération de gaz lorsque l'utilisateur le souhaite. Plus précisément un moyen de déclenchement tel qu'un actionneur 80 faisant partie du circuit électrique et accessible depuis l'extérieur du graisseur, permet le déclenchement de la génération des gaz, comme il sera expliqué plus en détail ci-après.

Sans sortir du cadre de l'invention, le troisième volume et/ou les éléments électriques de commande 8 peuvent être disposés en dehors du corps principal 1, 3 du graisseur.

Par ailleurs, un électrolyte est enfermé dans le volume d'expansion 11 de sorte que les gaz générés remplissent et mettent sous pression ledit volume d'expansion 11, étanche vis-à-vis de l'extérieur. En conséquence, le piston 9 est poussé vers l'orifice de sortie 2 ce qui entraîne la graisse vers cet orifice de sortie 2.

Le volume d'expansion 11 doit être parfaitement étanche, c'est pourquoi il est avantageusement prévu selon l'invention au moins un élément d'étanchéité 15 sur le piston 9, tel qu'un joint torique inséré par exemple dans une rainure circonférentielle du piston 9.

L'étanchéité du volume d'expansion 11 est en outre assurée par un élément mobile tel qu'une vis pointeau 13 placé dans un orifice spécifique 12 traversant la paroi de la partie cylindrique 3. L'orifice 12 est situé préférentiellement dans la partie « haute » de la course du piston 9. Par partie haute, il faut comprendre la zone dans laquelle le piston est placé au plus près de l'élément de support 6 et/ou du couvercle 4.

Avantageusement, et comme illustré sur la figure 3, l'orifice 12 comprend un premier canal 120 traversant de part en part la paroi dudit corps cylindrique 3, associé à un deuxième canal 121 débouchant par une première extrémité dans le dit premier canal 120 et par son autre extrémité à l'extérieur dudit corps cylindrique 3. L'élément mobile type vis pointeau 13 présente une longueur au moins égale celle du premier canal 120.

Vis-à-vis d'un dispositif connu, tel que représenté sur la figure 1 par exemple, la présente invention ne comprend pas de ressort intercalé entre le piston 9 et le moyen de séparation 6, et qui contribue à pousser le piston 9 vers l'orifice de sortie 2.

Par contre le graisseur selon l'invention comprend au moins un orifice spécifique 12 équipé d'une vis pointeau 13. Cet arrangement permet avantageusement de réaliser une étanchéité lors de l'expansion des gaz dans le volume 11. En outre, une fois le volume 10 totalement ou quasiment vidé de l'élément visqueux, c'est-à-dire lorsque le piston 9 est au plus près de l'orifice de sortie 2, l'utilisateur a la possibilité d'extraire la vis pointeau du trou 12, plus précisément d'au moins une partie du canal 120, mettant ainsi au moins le canal 121 à la pression atmosphérique en même temps que le volume d'expansion 11.

L'utilisateur a ainsi la possibilité de recharger le dispositif de graissage, en le remplissant de lubrifiant à travers l'orifice de sortie 2 (après avoir ôté le bouchon associé, si nécessaire). Cette opération peut être réalisée aisément car aucune force importante ne s'oppose à la translation du piston vers l'intérieur du dispositif, les pressions de part et d'autre du piston 9 étant sensiblement les mêmes. Seuls les efforts du ou des joints d'étanchéité 15 équipant la face extérieure du piston 9 s'opposent à une telle translation.

Une mise à la pression atmosphérique des volumes 10 et 11 permet cette opération de re-remplissage (ou recharge) du graisseur en substance graisseuse.

Une fois le volume 10 rempli à nouveau par l'utilisateur lui-même, le piston étant alors en position « haute », la vis 13 est enfoncée sur toute l'épaisseur et notamment jusqu'à ce qu'elle bouche le deuxième canal 121 ; ceci assure une étanchéité de l'intérieur du volume 11 qui peut être à nouveau rempli de gaz sous pression comme déjà expliqué.

On réalise ainsi un rechargement du dispositif en substance graisseuse à la fois simple et efficace. Une économie intéressante peut être réalisée.

D'un point de vue commercial il peut être envisagé de fournir un ensemble de remplissage comportant au moins une cartouche de graisse que l'utilisateur peut acheter séparément du dispositif d'origine. L'ensemble peut comprendre un embout spécifique à adapter sur l'orifice 2, un tuyau, un pistolet et autres accessoires.

Par ailleurs, le matériau constitutif du corps principal peut être transparent afin de voir aisément depuis l'extérieur le niveau de graisse présent dans le dispositif. Le ou les joints toriques 15 peuvent être colorés afin de mieux repérer ledit niveau.

Bien entendu, une fois rechargé le dispositif selon l'invention peut être placé sur un circuit ou un élément mécanique à graisser, après que l'orifice 2 ait été éventuellement dégagé. L'utilisateur a alors la possibilité de soulever la trappe 14 pour accéder à l'actionneur 80 afin de déclencher la formation de gaz dans le volume 11 comme explicité ci avant.

Il est très intéressant à noter que la possibilité de rechargement en substance visqueuse évoquée ci avant n'est possible que dans la mesure où les moyens de génération de gaz, et notamment l'électrolyte le permettent. Ceci n'est qu'une question de dimensionnement et de nature de ces éléments (en fait de choix) dès la conception du dispositif ; un tel choix est tout à fait à la portée de tout homme de métier de sorte qu'il ne sera pas davantage détaillé.

Il est encore envisageable de remplacer la cellule génératrice de gaz après plusieurs utilisations, de même que la batterie associée, afin de pouvoir recommencer plusieurs cycles de remplissage avec les mêmes éléments constitutifs du dispositif selon l'invention.

## Revendications

1. Dispositif de graissage automatique portatif de pièces mécaniques comprenant :
- un corps principal comportant au moins une paroi intérieure délimitant une chambre, et pourvue d'une ouverture (2), la paroi ayant une partie cylindrique (3) définissant un axe de référence du dispositif,
- un piston (9) mobile axialement à l'intérieur de la partie cylindrique (3) et délimitant avec la paroi intérieure du corps principal d'une part un volume variable (10) de stockage d'un élément visqueux tel qu'une graisse et relié à l'ouverture (2), et d'autre part un volume variable (11) d'expansion, ledit piston (9) étant mobile entre une position basse à proximité de l'ouverture (2) et une position haute éloignée de l'ouverture (2),
- des moyens générateurs de gaz, comportant un électrolyte enfermé dans le volume variable d'expansion (11) relié électriquement à une commande électrique (8, 80),
**caractérisé en ce que** la paroi de la partie cylindrique (3) comprend au moins un évent (12) disposé de façon à déboucher dans le volume variable d'expansion (11) en position haute du piston (9), ledit évent (12) étant fermé par un moyen de fermeture étanche amovible (13), et **en ce que** le piston (9) est pourvu d'un segment d'étanchéité (15) en contact étanche avec la partie cylindrique (3) de la paroi de la chambre sur toute la course axiale du piston entre la position haute et la position basse.

2. Dispositif selon la revendication 1 **caractérisé en ce que** ladite commande électrique (8, 80) est disposée dans un volume intérieur (7) du corps principal.

3. Dispositif selon l'une des revendications 1 ou 2 **caractérisé en ce que** ladite ouverture (2) est disposée sur l'axe de référence du dispositif.

4. Dispositif selon la revendication précédente **caractérisé en ce que** ledit évent (12) dans la paroi du cylindre comprend un premier canal (120) susceptible de loger l'élément d'étanchéité (13) sur toute sa longueur, et un deuxième canal (121) débouchant par une première extrémité dans le premier canal (120) et par une deuxième extrémité à l'extérieur de ladite partie cylindrique (3).

5. Dispositif selon la revendication 1 ou 2 **caractérisé en ce que** le corps principal comporte un couvercle hermétique (4) vissé sur une partie distale de la paroi extérieure du corps cylindrique (3).

6. Dispositif selon la revendication 5, **caractérisé en ce que** le couvercle (4) comprend plusieurs éléments dont l'un (14) est démontable pour permettre l'accès à un moyen de commande électrique (80).

7. Dispositif selon l'une quelconque des revendications précédentes **caractérisé en ce que** l'élément d'étanchéité mobile (13) comprend une vis pointeau.

8. Dispositif selon l'une quelconque des revendications précédentes **caractérisé en ce que** le segment d'étanchéité (15) monté sur la paroi extérieure dudit piston (9) comprend au moins un joint torique.

9. Dispositif selon l'une quelconque des revendications précédentes **caractérisé en ce que** le corps principal (1, 3) est constitué d'un matériau transparent.

10. Dispositif selon l'une quelconque des revendications précédentes **caractérisé en ce que** l'élément visqueux contient une huile qui présente une viscosité comprise entre 5 cSt et 1000cSt.

11. Ensemble comprenant un dispositif de graissage selon l'une quelconque des revendications précédentes, et une recharge remplie d'un élément visqueux tel qu'une graisse, adaptable sur l'ouverture du dispositif.

12. Procédé d'utilisation d'un dispositif de graissage portatif consistant à vider le dispositif de sa substance graisseuse à travers une ouverture (2), grâce à une expansion de gaz dans un volume variable d'expansion (11) du dispositif, ladite substance étant placée initialement dans un volume variable de stockage (10) du dispositif, séparé du volume variable d'expansion par un piston (9) **caractérisé en ce qu'**il consiste en outre à recharger le dispositif en substance graisseuse à travers ladite ouverture (2) pendant une phase de mise à la pression atmosphérique du volume de stockage (10) et du volume d'expansion (11), **en ce que** ladite mise à la pression atmosphérique est réalisée en ouvrant un évent (12) qui débouche dans ledit volume variable d'expansion (11), et **en ce que** l'on ferme l'évent (12) en fin de rechargement grâce à un moyen de fermeture étanche amovible (13).

13. Procédé selon la revendication 12 **caractérisé en ce qu'**il est mis en oeuvre par un dispositif selon l'une des revendications 1 à 10.
